# EUROPEAN PATENT SPECIFICATION

(11) **EP 4 024 554 B1**
(45) Date of publication and mention of the grant of the patent: **12.08.2026**
(21) Application number: 21215938.8
(22) Date of filing: 20.12.2021
(51) Int. Cl.: H01M 10/0585, H01M 50/46, H01M 10/052, H01M 10/0566

(54) **NONAQUEOUS ELECTROLYTE SECONDARY BATTERY**
SEKUNDÄRBATTERIE MIT WASSERFREIEM ELEKTROLYT
BATTERIE RECHARGEABLE ÉLECTROLYTIQUE NON AQUEUSE

(30) Priority: 05.01.2021 JP 2021000512
(43) Date of publication of application: 06.07.2022
(73) Proprietor: Prime Planet Energy & Solutions, Inc., Tokyo 103-0022 (JP)
(72) Inventor: ONO, Masato, Tokyo, 103-0022 (JP)
(74) Representative: Kuhnen & Wacker Patent- und Rechtsanwaltsbüro PartG mbB

(56) References cited:
- JP-B2- 4 033 398
- US-A1- 2014 147 724

## Description

### BACKGROUND OF THE INVENTION

### 1. Field of the Invention

The present disclosure relates to a nonaqueous electrolyte secondary battery.

### 2. Description of the Related Art

In recent years, nonaqueous electrolyte secondary batteries such as lithium secondary batteries have been suitably used in portable power sources such as personal computers and mobile terminals, and in power sources for vehicle drive in, for instance, battery electric vehicles (BEV), hybrid electric vehicles (HEV), and plug-in hybrid electric vehicles (PHEV).

A general nonaqueous electrolyte secondary battery includes an electrode body in which a positive electrode and a negative electrode are laid up on each other across a separator. Such an electrode body is roughly classified into a wound electrode body and a stacked-type electrode body. A stacked-type electrode body has a structure in which a positive electrode and a negative electrode are alternately laid up across separators interposed therebetween.

As one method for producing a stacked-type electrode body, a method is mentioned in which multiple mono-cells are formed, each being a sequential stack of a first electrode, a first separator, a second electrode and a second separator, and thereafter the mono-cells are further laid up on each other (for instance, see Japanese Patent No. 6093369). In such a production method, the separators and the electrodes are bonded to each other by an adhesive, for the purpose of preventing misalignment of the electrodes and the separators. For instance, Japanese Patent No. 6093369 illustrates a feature in which in order to bond separators and electrodes using an adhesive, an adhesive is applied onto both surfaces of the first separator, whereas the adhesive is applied only onto the surface of the second separator, that opposes the second electrode.

Further, patent document JP 4 033398 B2 discloses that a secondary battery is formed by alternately stacking a positive plate and a negative plate through a separator so as to face each other, at least the positive plate or the negative plate is interposed between two separators, the peripheries of two separators are fused and bonded in a portion being axial symmetry to the center line of the positive plate or the negative plate and on four sides of the positive plate or the negative plate to form a bag shape separator.

Moreover, patent document US 2014/147724 A1 discloses a battery with a packaged positive electrode made by placing a positive electrode in a package formed by joining at least part of end portions of a separator together by thermal welding; and a negative electrode being larger than the positive electrode and stacked on the packaged positive electrode. Welded portions of the separator formed by the thermal welding are provided outside an outer periphery of the negative electrode, when seen in a stacking direction.

### SUMMARY OF THE INVENTION

In conventional art, however, the nonaqueous electrolyte solution (in particular, charge carriers (e.g., lithium ions or the like)) do not move readily at portions of separators that are coated with an adhesive, and this may give rise to an increase in resistance. Moreover, active materials expand and contract repeatedly as the nonaqueous electrolyte secondary battery is repeatedly charged and discharged. When the active materials expand, a restraint pressure rises and the nonaqueous electrolyte solution is pushed out of the stacked-type electrode body. In conventional art, the nonaqueous electrolyte solution does not flow readily at portions, of separators, that are coated with an adhesive, and accordingly the nonaqueous electrolyte solution that has flowed out is hard to return to the stacked-type electrode body, which may give rise to an increase in resistance.

Therefore, it is an object of the present disclosure to provide a nonaqueous electrolyte secondary battery having low initial resistance and in which increases in resistance upon repeated charging and discharge are suppressed.

The nonaqueous electrolyte secondary battery disclosed herein includes a stacked-type electrode body which includes a cell unit in which a first electrode, a first separator, a second electrode and a second separator are laid up in this order; and a nonaqueous electrolyte solution. The first electrode has a first collector and a first active material layer. The second electrode has a second collector and a second active material layer. The area of a main surface of the first separator and the area of a main surface of the second separator are larger than the area of a main surface of a first active material layer of the first electrode and the area of a main surface of a second active material layer of the second electrode. A second active material layer non-formation section at which the second active material layer is not formed and the second collector is exposed, is provided in the second electrode. The second active material layer non-formation section has a missing portion in which the second collector is removed, from one main surface up to an opposing main surface. The first separator and the second separator are not bonded to the second active material layer of the second electrode; and the first separator and the second separator are welded at the missing portion of the second active material layer non-formation section. By virtue of such a configuration, a nonaqueous electrolyte secondary battery is provided that has low initial resistance and in which increases in resistance upon repeated charging and discharge are suppressed.

In a desired implementation of the nonaqueous electrolyte secondary battery disclosed herein, the missing portion is a through-hole. In such a configuration, it is easy to fix the first electrode to the first separator and the second separator, by welding at one site. In addition, it is easy to increase the strength of the second active material layer non-formation section, without limiting the position the missing portion.

According to the nonaqueous electrolyte secondary battery disclosed herein, the first active material layer and the second active material layer oppose each other. The area of the main surface of the first active material layer of the first electrode is larger than the area of the main surface of the second active material layer of the second electrode. An opposing region that opposes the second active material layer is formed in a central portion of the first active material layer. A non-opposing region that does not oppose the second active material layer is formed in an outer peripheral edge portion of the first active material layer. The first separator and the first electrode are bonded by a first adhesive. The first adhesive that bonds the first electrode and the first separator is not disposed in the opposing region of the first active material layer, and is disposed outside the opposing region. Such a configuration allows further reducing initial resistance, and further suppressing increases in resistance upon repeated charging and discharge.

Here, in a case where the first electrode is a negative electrode and the second electrode is a positive electrode, it becomes possible to prevent, to a high degree, that ions (for instance, lithium ions) functioning as charge carriers should precipitate in the form of a metal, since the area of the main surface of the negative electrode active material layer is larger than the area of the main surface of the positive electrode active material layer.

In a desired implementation of the nonaqueous electrolyte secondary battery disclosed herein, the thickness of the first adhesive is smaller than the thickness of the second electrode. Such a configuration allows preventing stress from concentrating at a portion where the first adhesive is disposed, at the time where the cell units are stacked.

In a desired implementation of the nonaqueous electrolyte secondary battery disclosed herein, the stacked-type electrode body has a stack in which a plurality of the cell units is laid up, such that the outermost layers of the stack are respectively a positive electrode and a negative electrode; and a single negative electrode. The single negative electrode is laid on the positive electrode of an outermost layer of the stack. Such a configuration allows using the lithium in the positive electrode of the outermost layer for charging and discharge, and allows increasing cell capacity.

### BRIEF DESCRIPTION OF THE DRAWINGS

FIG. 1 is a cross-sectional diagram illustrating schematically the internal structure of a lithium ion secondary battery according to an embodiment of the present disclosure;
FIG. 2 is an exploded perspective-view diagram illustrating schematically a cell unit included in a stacked-type electrode body of a lithium ion secondary battery according to an embodiment of the present disclosure;
FIG. 3 is a perspective-view diagram for illustrating schematically an example of a multilayer structure of a positive electrode and separators in a cell unit included in a stacked-type electrode body of a lithium ion secondary battery according to an embodiment of the present disclosure;
FIG. 4 is a perspective-view diagram for illustrating schematically a variation of a multilayer structure of a positive electrode and separators in a cell unit included in a stacked-type electrode body of a lithium ion secondary battery according to an embodiment of the present disclosure;
FIG. 5 is a perspective-view diagram for illustrating schematically another variation of a multilayer structure of a positive electrode and separators in a cell unit included in a stacked-type electrode body of a lithium ion secondary battery according to an embodiment of the present disclosure;
FIG. 6 is a cross-sectional diagram illustrating schematically a cell unit included in a stacked-type electrode body of a lithium ion secondary battery according to an embodiment of the present disclosure; and
FIG. 7 is a schematic diagram of a negative electrode of a cell unit included in a stacked-type electrode body of a lithium ion secondary battery according to an embodiment of the present disclosure.

### DESCRIPTION OF THE PREFERRED EMBODIMENTS

Embodiments according to the present disclosure will be explained hereafter with reference to accompanying drawings. It should be noted that matters which are not specifically mentioned in the present specification and are necessary for implementation of the present disclosure can be understood as design matters of those skilled in the art based on the conventional art in the field. The disclosure can be realized on the basis of the disclosure of the present specification and common technical knowledge in the relevant technical field. In the drawings below, members and portions that elicit identical effects are denoted with identical reference symbols. The dimensional relationships (length, width, thickness and so forth) in the drawings do not reflect actual dimensional relationships.

The present embodiment will be explained in detail below on the basis of a lithium ion secondary battery as an example. It should be noted that in the present specification, the term "secondary battery" denotes power storage devices in general capable of being charged and discharged repeatedly, and encompasses so-called storage batteries and power storage elements such as electrical double layer capacitors. In the present specification, the term "lithium ion secondary battery" denotes a secondary battery that utilizes lithium ions as charge carriers, and in which charging and discharge are realized as a result of movement of charge with lithium ions, between a positive electrode and a negative electrode.

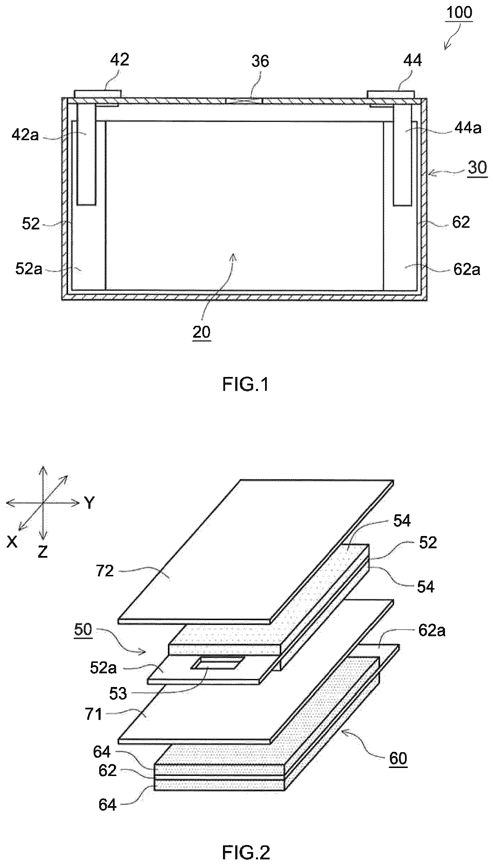

FIG. 1 illustrates schematically the internal structure of a lithium ion secondary battery 100 according to the present embodiment. The lithium ion secondary battery 100 illustrated in FIG. 1 includes a stacked-type electrode body 20, a nonaqueous electrolyte solution (not shown), and a square battery case 30 that accommodates the foregoing. The battery case 30 is sealed, and hence the lithium ion secondary battery 100 is a sealed battery.

As illustrated in FIG. 1, the battery case 30 is provided with a positive electrode terminal 42 and a negative electrode terminal 44 for external connection, and with a thin-walled safety valve 36 configured to relieve internal pressure in the battery case 30 in a case where the internal pressure rises to or above a predetermined level. The battery case 30 is further provided with a liquid injection port (not shown) for injecting a nonaqueous electrolyte solution. The positive electrode terminal 42 is electrically connected to a positive electrode collector plate 42a. The negative electrode terminal 44 is electrically connected to a negative electrode collector plate 44a.

For instance, a metallic material such as aluminum is herein a lightweight material having high thermal conductivity, and hence is used as the material of the battery case 30. However, the material of the battery case 30 is not limited thereto, and the battery case 30 may be made of resin. The battery case 30 may also be a laminate case or the like in which a laminate film is used.

FIG. 2 illustrates schematically a cell unit 10 included in the stacked-type electrode body 20. FIG. 2 is an exploded perspective-view diagram. In FIG. 2 and the following figures, the X direction is the longitudinal direction of the positive electrode 50 and the negative electrode 60 included in the stacked-type electrode body 20, the Y direction is the width direction of the positive electrode 50 and the negative electrode 60 included in the stacked-type electrode body 20, and the Z direction is the stacking direction of the positive electrode 50 and the negative electrode 60.

The stacked-type electrode body 20 is provided with at least one cell unit 10 such as that illustrated in the figures. Typically, the stacked-type electrode body 20 includes a plurality of cell units 10. The number of cell units 10 of the stacked-type electrode body 20 is not particularly limited, and may be identical to the number of cell units of a stacked-type electrode body used in a conventional lithium ion secondary battery; for example the stacked-type electrode body 20 may have from 1 to 150 cell units 10, desirably from 20 to 100 cell units 10.

As illustrated in FIG. 2, each cell unit 10 has the negative electrode 60 as a first electrode, a separator 71 as a first separator, the positive electrode 50 as a second electrode, and a separator 72 as a second separator. The negative electrode 60, the separator 71, the positive electrode 50, and the separator 72 are laid in this order in the cell unit 10.

The positive electrode 50 has a positive electrode collector 52 and a positive electrode active material layer 54 provided on the positive electrode collector 52. The negative electrode 60 has a negative electrode collector 62 and a negative electrode active material layer 64 provided on the negative electrode collector 62. The positive electrode 50 and the negative electrode 60 are laid up so that the positive electrode active material layer 54 and the negative electrode active material layer 64 face each other.

In the present embodiment, the area of a main surface of the negative electrode active material layer 64 of the negative electrode 60 is larger than the area of a main surface of the positive electrode active material layer 54 of the positive electrode 50. This allows highly suppressing precipitation of lithium ions in the form of metallic lithium. It should be noted that in embodiments not according to the invention the area of the main surface of the negative electrode active material layer 64 of the negative electrode 60 may be identical to the area of the main surface of the positive electrode active material layer 54 of the positive electrode 50. It should be noted that the term main surface of an active material layer signifies herein a surface having the largest area from among the surfaces that make up that active material layer. In the present embodiment, therefore, the main surfaces of the negative electrode active material layer 64 are the surface in contact with the negative electrode collector 62, and the surface on the reverse side from the former surface. The main surfaces of the positive electrode active material layer 54 are the surface in contact with the positive electrode collector 52, and the surface on the reverse side from the former surface. In terms of insulating properties, on the other hand, the areas of the main surfaces of the separator 71 and of the separator 72 are each larger than the area of the main surface of the negative electrode active material layer 64 of the negative electrode 60 and the area of the main surface of the positive electrode active material layer 54 of the positive electrode 50. The term main surface of a separator signifies herein a surface having the largest area from among the surfaces that constitute that separator.

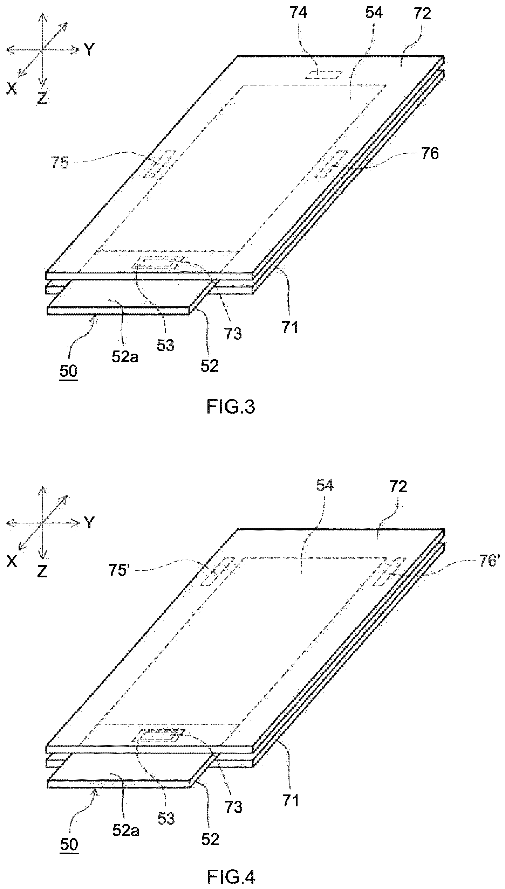

The positive electrode 50 will be described in detail next. FIG. 3 illustrates schematically the multilayer structure of a positive electrode and of separators. As illustrated in FIG. 2, in the present embodiment, the positive electrode active material layer 54 is provided on both faces of the positive electrode collector 52. However, in embodiments not according to the invention the positive electrode active material layer 54 may be provided on just one face of the positive electrode collector 52. At one end of the positive electrode 50, there is provided a positive electrode active material layer non-formation section 52a, which is an exposed portion of positive electrode collector 52 at which the positive electrode active material layer 54 is not formed.

As illustrated in FIG. 2 and FIG. 3, the positive electrode active material layer non-formation section 52a has a missing portion 53 resulting from removal of the positive electrode collector 52 from one main surface up to the opposite main surface. In the illustrated example, the missing portion 53 is a through-hole. In this case, it is easy to fix the positive electrode 50 to the separator 71 and the separator 72 by welding at one site. However, the form of the missing portion 53 is not limited to a through-hole, and the missing portion 53 may be a cutout portion or the like.

The separator 71 and the separator 72 are not bonded (not adhered) to the positive electrode active material layer 54 of the positive electrode 50. As illustrated in FIG. 3, by contrast, a first weld portion 73 is formed at the missing portion (herein the through-hole) 53 through welding, for instance, ultrasonic welding or laser welding, of the separator 71 and the separator 72. When the positive electrode active material layer non-formation section and the separators are joined by an adhesive, ordinarily the type of the bonding material is limited, since in that case, different materials, namely a metal (positive electrode active material layer non-formation section) and a resin (separator), are bonded to each other, and furthermore a strict management of bonding conditions and so forth is required. In a case, however, where the separator 71 and the separator 72 are welded to each other, as in the present embodiment, joining can be accomplished easily, which is advantageous, for instance, in terms of ease of process control and cost.

Here, the larger the dimensions of the missing portion 53, the lower is the strength of the positive electrode active material layer non-formation section 52a. In a case where the missing portion 53 is a through-hole, in the positive electrode active material layer non-formation section 52a, it suffices that the positive electrode collector 52 be removed just at the region necessary for welding; this is accordingly advantageous in that the strength of the positive electrode active material layer non-formation section 52a is easily increased without limiting the position the missing portion 53.

In the illustrated example, the through-hole 53 is a square hole, but the shape of the through-hole 53 is not particularly limited. The shape of the through-hole 53 may be determined as appropriate in accordance with the shape of the portion (i.e. first weld portion 73) at which the separator 71 and the and separator 72 are welded. The through-hole 53 may be a hole of, for instance, circular shape or elliptical shape. In the illustrated example, the number of through-holes 53 is one. However, there may be a plurality of (i.e. two or three) through-holes 53.

The dimensions of the through-hole 53 are not particularly limited. The dimensions of the through-hole 53 may be established as appropriate in accordance with the dimensions of the first weld portion 73. From the viewpoint of achieving high strength in the positive electrode active material layer non-formation section 52a, the surface area of the through-hole 53 in the radial direction is desirably from 1.05 times to 2 times the surface area of the first weld portion 73 in the surface direction.

In the illustrated example, the position of the through-hole 53 lies at a central portion of the positive electrode active material layer non-formation section 52a in a direction (Y direction in FIG. 2 and FIG. 3) perpendicular to the protrusion direction of the positive electrode active material layer non-formation section 52a, in the vicinity of the positive electrode active material layer 54. However, the position of the missing portion 53 is not particularly limited.

The position of the first weld portion 73 is not particularly limited so long as it lies within the range of the through-hole 53. In the illustrated example, there is one first weld portion 73. However, there may be a plurality of (for instance, two or three) first weld portions 73.

By providing the missing portion 53 in the positive electrode active material layer non-formation section 52a and by limiting the movement of the positive electrode 50, through welding of the separator 71 and the separator 72 to each other at the missing portion 53 but without bonding of the separator 71 and the separator 72 to the positive electrode active material layer 54, as in the present embodiment, it becomes possible to prevent that an adhesive should hinder the movement of ions (i.e. lithium ions in the present embodiment), as charge carriers, in the positive electrode active material layer 54 which is a region greatly involved in charging and discharging of the positive electrode 50. As a result, the initial resistance can be reduced as compared with that in conventional art, in which separators and active material layers are bonded over the entire surface. Moreover, the uniformity of resistance of the positive electrode 50 in the surface direction is excellent. Upon repeated charging and discharge of the lithium ion secondary battery 100, the nonaqueous electrolyte solution flows out of the stacked-type electrode body 20, by being pushed out on account of expansion of the active material layers; in the lithium ion secondary battery 100, however, it is possible to prevent that the return of the outflowing nonaqueous electrolyte solution to the stacked-type electrode body 20 should be hindered by an adhesive. As a result, it becomes possible to suppress increases in resistance at the time of repeated charging and discharge, as compared with conventional art in which separators and active material layers are bonded over the entire surface. Moreover, the time required for permeation of the nonaqueous electrolyte solution into the electrode body at the time of production of the lithium ion secondary battery 100 can be shortened.

A second weld portion 74 may be formed through welding of the separator 71 and the separator 72 to each other, at a portion outward of the end of the positive electrode 50 opposing the positive electrode active material layer non-formation section 52a, as in the present embodiment.

The position of the second weld portion 74 is not particularly limited so long as it lies in the portion outward of the end of the positive electrode 50 opposing the positive electrode active material layer non-formation section 52a. In the illustrated example, there is one second weld portion 74. However, there may be a plurality of (for instance, two or three) second weld portions 74.

In the cell unit 10, through welding of the separator 71 and the separator 72 to each other at the through-hole 53 of the positive electrode active material layer non-formation section 52a and at the portion outward of the end of the positive electrode opposing the positive electrode active material layer non-formation section 52a, while the positive electrode 50 is sandwiched by the separator 71 and the separator 72, it becomes possible for the positive electrode to be fixed, by the first weld portion 73 and second weld portion 74, as well as by frictional forces between the separator 71, the separator 72 and the positive electrode 50. Misalignment between the positive electrode 50 and the separator 71 and the separator 72 can be suppressed as a result.

In a case in particular where, as in the illustrated example, one first weld portion 73 is provided at the central portion, in the width direction (i.e. Y direction in the drawings) of the positive electrode 50, on the positive electrode active material layer non-formation section 52a side, and one second weld portion 74 is provided in the central portion, in the width direction of the positive electrode 50, outward of the end opposing the positive electrode active material layer non-formation section 52a, misalignment of the foregoing can be suppressed with a small number of weld portions, namely a total of two herein.

The separator 71 and the separator 72 may be welded to each other also outward of an end of the positive electrode 50 in the width direction (i.e. Y direction in the drawings), as in the illustrated example. In the illustrated example, a third weld portion 75 and a fourth weld portion 76 are formed outward of respective ends of the positive electrode 50 in the width direction. Such a configuration allows further suppressing misalignment of the positive electrode 50.

FIG. 4 illustrates a variation pertaining to the arrangement of these joints. In the example illustrated in FIG. 4, a weld portion 75' and a weld portion 76' are formed so as to sandwich the positive electrode 50, on respective outward sides of the ends of the positive electrode 50 in the width direction (i.e. Y direction in the drawings), in addition to the first weld portion 73 formed in the through-hole 53. The weld portion 75' and the weld portion 76' are formed at respective ends far from the positive electrode active material layer non-formation section 52a. Such a configuration allows suppressing, to a high degree, misalignment derived from rotation of the positive electrode 50, with a small number of weld portions, namely a total of three herein.

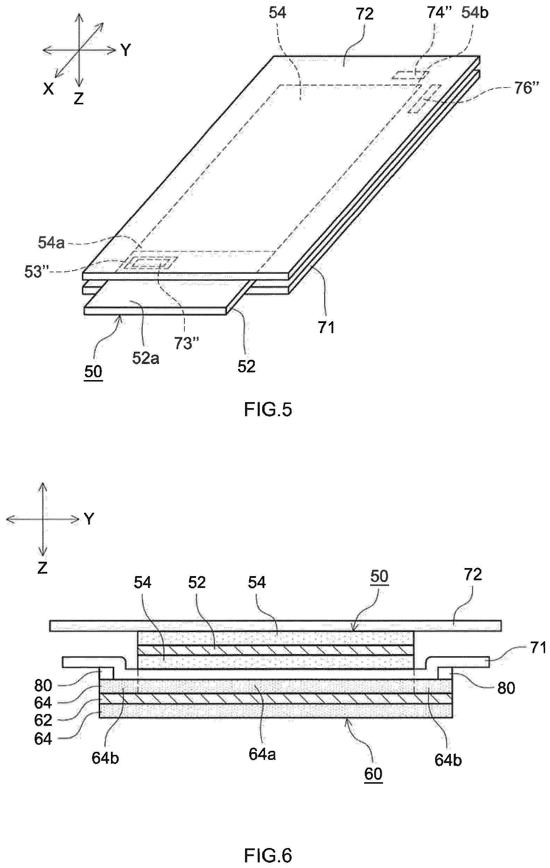

FIG. 5 illustrates another variation pertaining to the arrangement of joints. In the example illustrated in FIG. 5, a first weld portion 73" is formed in a through-hole 53". The through-hole 53" and the first weld portion 73' are formed at positions in the vicinity of a first corner 54a of the positive electrode active material layer 54. In addition, a weld portion 74" and a weld portion 76" are formed so as to flank a second corner 54b on a diagonal relative to the first corner of the positive electrode active material layer 54. Such a configuration allows suppressing, to a high degree, misalignment derived from rotation of the positive electrode 50, with a small number of weld portions, namely a total of three herein.

In the illustrated example, the shape of the weld portions is rectangular, but the shape of the weld portions is not particularly limited. The shape of the weld portions may be square, circular or elliptical.

The negative electrode 60 will be explained in detail next. In the present embodiment, as illustrated in FIG. 2, the negative electrode active material layer 64 is provided on both faces of the negative electrode collector 62. However, in embodiments not according to the invention the negative electrode active material layer 64 may be provided on just one face of the negative electrode collector 62. At one end of the negative electrode 60, there is provided a negative electrode active material layer non-formation section 62a, which is an exposed portion of negative electrode collector 62 at which the negative electrode active material layer 64 is not formed.

As illustrated in FIG. 1 and FIG. 2, the positive electrode active material layer non-formation section 52a and the negative electrode active material layer non-formation section 62a protrude, in mutually opposite directions, from a stacking portion of the positive electrode active material layer 54 and the negative electrode active material layer 64. The positive electrode active material layer non-formation section 52a and the negative electrode active material layer non-formation section 62a function as respective collector tabs. The shape of the positive electrode active material layer non-formation section 52a and of the negative electrode active material layer non-formation section 62a is not particularly limited, and the foregoing may be worked to a predetermined shape by cutting or the like. The directions in which the positive electrode active material layer non-formation section 52a and the negative electrode active material layer non-formation section 62a protrude are not limited to those illustrated in the figure. The positive electrode active material layer non-formation section 52a and the negative electrode active material layer non-formation section 62a may be provided at positions and in shapes so as not to overlap each other, and may protrude in a same direction. In the illustrated example, the positive electrode active material layer non-formation section 52a and the negative electrode active material layer non-formation section 62a are provided at ends of the electrode in the longitudinal direction (X direction in the drawings), but may be provided at ends of the electrode in the width direction (Y direction in the drawings).

In the stacked-type electrode body 20, the positive electrode active material layer non-formation sections 52a of a plurality of cell units 10 are put together and are electrically joined to the positive electrode collector plate 42a, as illustrated in FIG. 1. The negative electrode active material layer non-formation sections 62a of a plurality of cell units 10 are put together, and are electrically bonded to the negative electrode collector plate 44a, as illustrated in FIG. 1. Joining of the foregoing is accomplished, for instance, by ultrasonic welding, resistance welding or laser welding.

A sheet-shaped or foil-shaped member made up of a metal of good conductivity (for instance, aluminum, nickel, titanium or stainless steel) can be used as the positive electrode collector 52, and an aluminum foil is desirably used herein. The thickness of the positive electrode collector 52 is not particularly limited, and is for instance, from 5 µm to 35 µm, desirably from 7 µm to 20 µm.

The positive electrode active material layer 54 contains at least a positive electrode active material. Examples of the positive electrode active material include, for instance, lithium-transition metal composite oxides such as lithium-nickel-cobalt-manganese composite oxides (for example, LiNi_{1/3}Co_{1/3}Mn_{1/3}O₂), lithium-nickel composite oxides (for example, LiNiO₂), lithium-cobalt composite oxides (for example, LiCoO₂), and lithium-nickel-manganese composite oxides (for example, LiNi_{0.5}Mn_{1.5}O₄). The positive electrode active material layer 54 can further contain, for instance, a conductive material and a binder. For instance, carbon black such as acetylene black (AB) or some other carbon material (graphite or the like) can be desirably used as the conductive material. For instance, polyvinylidene fluoride (PVDF) can be used as the binder. The thickness of the positive electrode active material layer 54 is not particularly limited, and is, for instance, from 20 µm to 300 µm.

A sheet-shaped or foil-shaped member made up of a metal of good conductivity (for instance, copper, nickel, titanium or stainless steel) can be used as negative electrode collector 62 ; a copper foil is desirably used herein. The thickness of the negative electrode collector 62 is, for instance, from 5 µm to 35 µm, desirably from 7 µm to 20 µm.

The negative electrode active material layer 64 contains at least a negative electrode active material. Examples of the negative electrode active material include carbon materials such as graphite, hard carbon and soft carbon. The negative electrode active material layer 64 can further contain, for instance, a binder and a thickener. For instance, styrene butadiene rubber (SBR) or the like can be used as the binder. For instance, carboxymethyl cellulose (CMC) can be used as the thickener. The thickness of the negative electrode active material layer 64 is not particularly limited, and is, for instance, from 20 µm to 300 µm.

Various types of porous sheets same as or similar to those used in conventional lithium ion secondary batteries can be used as the separator 71 and the separator 72, and examples thereof include porous resin sheets made of a polyolefin such as polyethylene (PE) or polypropylene (PP). Such a porous sheet may have a single-layer structure or a multilayer structure of two or more layers (for instance, a three-layer structure in which PP layers are laid up on both faces of a PE layer). The separator 71 and the separator 72 may have a heat resistant layer (HRL). The thickness of the separator 71 and the separator 72 is not particularly limited, and is, for instance, from 10 µm to 40 µm.

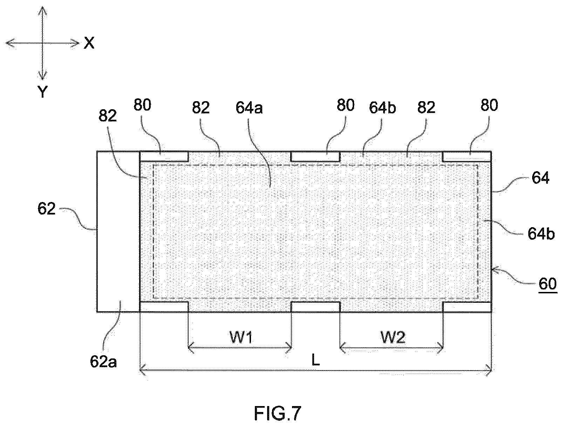

FIG. 6 illustrates a cross-sectional diagram of a cell unit 10. FIG. 6 is a cross-sectional diagram along the width direction (i.e. Y direction in FIG. 2) of the cell unit 10, and along the stacking direction of the positive electrode 50 and the negative electrode 60. FIG. 7 illustrates the negative electrode 60 included in the cell unit 10. FIG. 7 is a view along the main surface direction of the negative electrode 60. As illustrated in FIG. 6 and FIG. 7, an opposing region 64a that faces the positive electrode active material layer 54 is formed in the central portion of the negative electrode active material layer 64. Further, a non-opposing region 64b that does not face the positive electrode active material layer 54 is formed at an outer peripheral edge portion of the negative electrode active material layer 64.

According to the invention the separator 71 and the negative electrode 60 are bonded by way of a first adhesive 80, as illustrated in FIG. 6 and FIG. 7. The first adhesive 80 that bonds the separator 71 and the negative electrode 60 is not disposed in the opposing region 64a of the negative electrode active material layer 64, but is disposed at a region other than the opposing region 64a. The first adhesive 80 is disposed in either one or both of the negative electrode active material layer non-formation section 62a and the non-opposing region 64b of the negative electrode active material layer 64.

The first adhesive 80 acts so as to suppress misalignment between the negative electrode 60 and the separator 71. By virtue of the fact that the first adhesive 80 is not disposed in the opposing region 64a of the negative electrode active material layer 64 but outside the opposing region 64a, it becomes possible to prevent that the adhesive should hinder the movement of ions (i.e. lithium ions in the present embodiment), as charge carriers, in the negative electrode active material layer 64 which is a region greatly involved in charging and discharging of the negative electrode 60. Accordingly, the initial resistance can be reduced as compared with that in conventional art. Moreover, the uniformity of resistance of the negative electrode 60 in the surface direction is excellent. It becomes also possible to further suppress increases in resistance at the time of repeated charging and discharge of the lithium ion secondary battery 100. In addition, the amount of adhesive that is required is smaller than that in conventional art, which is advantageous, for instance, in terms of cost. Further, each layer of the cell unit 10 is fixed by bonding / welding, and electrode misalignment is suppressed, thanks to which handleability is improved and highspeed stacking is made possible.

In the illustrated example, the first adhesive 80 is arranged at the non-opposing region 64b of the outer peripheral edge portion of the negative electrode active material layer 64. In the present embodiment, however, the arrangement of the first adhesive 80 is not particularly limited, so long as the first adhesive 80 is disposed at a region other than the opposing region 64a of the negative electrode active material layer 64 of the negative electrode 60, and the negative electrode 60 and the separator 71 are bonded. The first adhesive 80 may be disposed only on the negative electrode active material layer non-formation section 62a, to elicit bonding to the separator 71. The first adhesive 80 may be disposed both on the non-opposing region 64b of the negative electrode active material layer 64 and on the negative electrode active material layer non-formation section 62a, to elicit bonding to the separator 71. The first adhesive 80 is not depicted in FIG. 2.

For instance, a hot-melt adhesive, an ultraviolet-curable adhesive, a thermosetting adhesive or the like can be used as the first adhesive 80.

In the example illustrated in FIG. 7, the first adhesive 80 is not disposed at least in part of the non-opposing region 64b of the negative electrode active material layer 64. However, the arrangement of the first adhesive 80 is not limited thereto. The first adhesive 80 may be disposed, without gaps, all over the non-opposing region 64b of the negative electrode active material layer 64.

In the example illustrated in FIG. 7, the first adhesive 80 has a rectangular cross-sectional shape, but the shape of the first adhesive 80 is not particularly limited. The first adhesive 80 may have a circular or elliptical cross-sectional shape.

In the example illustrated in FIG. 7 there are portions where no first adhesive 80 is disposed, between a given first adhesive 80 site and another first adhesive 80 site. A nonaqueous electrolyte solution can flow through such portions. In the illustrated example, therefore, a channel (nonaqueous electrolyte solution flow channel) 82 through which a nonaqueous electrolyte solution flows is formed at portions where the first adhesive 80 is not disposed. By providing this nonaqueous electrolyte solution flow channel 82 in the non-opposing region 64b of the negative electrode active material layer 64, it becomes possible to significantly shorten the time necessary for permeation of the nonaqueous electrolyte solution into the electrode body, during the production of the nonaqueous electrolyte secondary battery.

In a case where the nonaqueous electrolyte solution flow channel 82 is provided, the arrangement of the first adhesive 80 in the non-opposing region 64b of the negative electrode active material layer 64 and the arrangement of the nonaqueous electrolyte solution flow channel 82 in the non-opposing region 64b of the negative electrode active material layer 64 are not particularly limited. In the example illustrated in FIG. 7, the shape of the main surface of the negative electrode active material layer 64 is rectangular. Therefore, the non-opposing region 64b is a rectangular frame-shaped region made up of two short sides and two long sides, as illustrated in FIG. 7. The first adhesive 80 may be disposed at a portion on any side of the rectangular frame-shaped non-opposing region 64b.

The distance from the long-side portion of the negative electrode active material layer 64 to the center of the negative electrode active material layer 64 is short. Accordingly, in a case where the nonaqueous electrolyte solution flow channel 82 is formed at least on the long-side portion of the non-opposing region 64b, this is advantageous in that the nonaqueous electrolyte solution can be easily allowed to permeate up to the center of the negative electrode active material layer 64.

The nonaqueous electrolyte solution flow channel 82 is desirably disposed at portions on two or more sides of the rectangular frame-shaped non-opposing region 64b, more desirably disposed at portions on three or more sides, and is yet more desirably disposed at portions on all four sides.

In the illustrated example, one nonaqueous electrolyte solution flow channel 82 is formed in a short-side portion of the non-opposing region 64b, and two nonaqueous electrolyte solution flow channels 82 are formed in the long-side portions of the non-opposing region 64b. However, the number of nonaqueous electrolyte solution flow channels 82 disposed on one side of the non-opposing region 64b is not particularly limited. The number of nonaqueous electrolyte solution flow channels 82 may be one or more.

As illustrated in FIG. 7, the non-opposing region 64b is a rectangular frame-shaped region, and accordingly the first adhesive 80 is disposed along sides of the main surface of the negative electrode active material layer 64. The dimensions of the nonaqueous electrolyte solution flow channels 82 are not particularly limited, so long as a nonaqueous electrolyte solution can flow therethrough. For example, an instance where the total dimension of the nonaqueous electrolyte solution flow channels 82 in the direction of a side of the main surface of the negative electrode active material layer 64 (for instance, the total of length W1 and length W2 on the long-side direction, in the case of FIG. 7) is 10% or more the length of a side of the main surface of the negative electrode active material layer 64 (for instance, the length L of a long side, in the case of FIG. 7), is advantageous in that the opposing region 64a of the negative electrode active material layer 64 can be particularly readily impregnated with the nonaqueous electrolyte solution. Desirably, the total dimension of each nonaqueous electrolyte solution flow channel 82 in the direction of a side of the main surface of the negative electrode active material layer 64 is 30% or more, more desirably 50% or more, yet more desirably 70% or more, and most desirably 90% or more, the length of a side of the main surface of the negative electrode active material layer 64.

As illustrated in FIG. 6, the thickness of the first adhesive 80 disposed in the non-opposing region 64b of the negative electrode active material layer 64 (i.e. the dimension of the first adhesive 80 in the stacking direction of the positive electrode 50 and the negative electrode 60) may be set to be smaller than the thickness of the positive electrode 50 (i.e. the dimension of the positive electrode 50 in the stacking direction of the positive electrode 50 and the negative electrode 60).

If the first adhesive 80 is greater than the thickness of the positive electrode 50, the portion at which first adhesive 80 is present protrudes from the cell unit 10. In consequence, if pressure is applied in the stacking direction of the stacked-type electrode body 20 in which such cell units 10 are stacked, the pressure concentrates in the first adhesive 80. This pressure concentration may give rise to problems such as deformation of the negative electrode 60 and breakage of the negative electrode active material layer 64. Therefore, in a case where the thickness of the first adhesive 80 is smaller than the thickness of the positive electrode 50, the portion at which the first adhesive 80 is present does not protrude in the cell unit 10, and thus problems derived from such concentration of pressure are suppressed.

The cell unit 10 can be produced, for instance, as follows. The positive electrode 50, the negative electrode 60, and the separator 71 and the separator 72 are prepared first. The separator 71, the positive electrode 50 and the separator 72 are stacked next, and the separator 71 and the separator 72 are welded to each other. Next, the first adhesive 80 is applied onto the non-opposing region 64b of the negative electrode active material layer 64 of the negative electrode 60, and bonding thereof to the separator 71 is performed.

Specifically, the positive electrode 50 in which the positive electrode active material layer 54 is provided on both faces of the positive electrode collector 52 is produced in accordance with a conventional method. The negative electrode 60 in which the negative electrode active material layer 64 is provided on both faces of the negative electrode collector 62 is produced in accordance with a conventional method. It should be noted that the positive electrode active material layer non-formation section 52a at which the positive electrode collector 52 is exposed is provided in the positive electrode 50, and the missing portion 53 is provided, for instance, by punching, in the positive electrode active material layer non-formation section 52a. A positive electrode collector 52 having the missing portion 53 beforehand may be used herein. The negative electrode active material layer non-formation section 62a at which the negative electrode collector 62 is exposed is provided in the negative electrode 60. Two separators having no adhesive layer are prepared as the separator 71 and the separator 72.

The positive electrode 50 is laid so as to be sandwiched between the separator 71 and the separator 72. The missing portion 53 can be covered by the separator 71 and the separator 72 since the area of the main surface of the separator 71 and the area of the main surface of the separator 72 are each larger than the area of the main surface of the positive electrode active material layer 54. The separator 71 and the separator 72 are welded to each other by heat welding, ultrasonic welding, laser welding or the like, at the missing portion 53. At this time, welding of the separator 71 and the separator 72 to each other outside the missing portion 53 is also performed, as the case may require.

The first adhesive 80 is applied on the non-opposing region 64b of one negative electrode active material layer 64 of the negative electrode 60. The applying method is not particularly limited, but it is advantageous herein to apply the first adhesive 80 using a piezoelectric jet dispenser or the like, since the non-opposing region 64b of the negative electrode active material layer 64 is very small.

The separator 71 and the negative electrode active material layer 64 coated with the first adhesive 80 are superimposed on each other and bonded so that the positive electrode active material layer 54 and the central portion of the negative electrode active material layer 64 face each other. Bonding is carried out as appropriate according to the type of the first adhesive 80. In a case, for instance, where the first adhesive 80 is a hot-melt adhesive, the hot-melt adhesive is allowed to be cooled and solidified. In a case, for instance, where the first adhesive 80 is an ultraviolet-curable adhesive, the adhesive is allowed to be cured by being irradiated with ultraviolet rays. In a case, for instance, where the first adhesive 80 is a thermosetting adhesive, the adhesive is allowed to be cured through heating.

In each cell unit 10, the negative electrode 60 is bonded to the separator 71, and the positive electrode 50 is fixed between the welded separator 71 and the separator 72, as a result of which the foregoing are integrated with each other. By using such cell units 10, multiple cell units 10 can be stacked on each other at a high speed at producing the stacked-type electrode body 20, in a case where the stacked-type electrode body 20 is configured through stacking of a plurality of cell units 10.

In a case where the stacked-type electrode body 20 is configured through stacking of a plurality of cell units 10, any two adjacent cell units 10 may or may not be or bonded to each other. In a case where two adjacent cell units 10 are bonded to each other, the negative electrode 60 of one cell unit 10 and the separator 72 of the other cell unit 10 are bonded to each other. This is advantageous since in that case misalignment between cell units 10 is unlikelier to occur.

In a case where two adjacent cell units 10 are bonded to each other, the negative electrode 60 of one cell unit 10 and the positive electrode 50 of the other cell unit 10 face each other. Specifically, the negative electrode active material layer 64 of the negative electrode 60 of one cell unit 10 and the positive electrode active material layer 54 of the other cell unit 10 face each other. In this case it is desirable to bond the negative electrode 60 of one cell unit 10 and the separator 72 of the other cell unit 10 in the same manner in which the negative electrode 60 and the separator 71 of the cell units 10 are bonded to each other.

Specifically, desirably the negative electrode active material layer 64 of the negative electrode 60 of one cell unit 10 has formed, at a central portion thereof, an opposing region that faces the positive electrode active material layer 54 of the other cell unit 10, and has formed, at an outer peripheral edge portion, a non-opposing region not facing the positive electrode active material layer 54 of the other cell unit 10. It is moreover desirable that, in the same way as described above, a second adhesive that bonds two adjacent cell units 10 to each other is not disposed in the opposing region 64a of the negative electrode active material layer 64, but is disposed at a region (i.e. non-opposing region 64b) other than the opposing region 64a, and that the second adhesive is not disposed in at least part of the non-opposing region 64b, such that a channel is formed through which the nonaqueous electrolyte solution flows. This results in better impregnability of the nonaqueous electrolyte solution into the stacked-type electrode body 20 at the time of production, while misalignment between cell units is suppressed. Also uniformity of resistance in the surface direction of the electrode is better in this case.

Examples of the second adhesive include adhesives same as those exemplified as the first adhesive. The second adhesive may be identical to, or different from, the adhesive used as the first adhesive.

In a case where the stacked-type electrode body 20 is configured in the form of a stack of a plurality of cell units 10, the stacked-type electrode body 20 is specifically made up of a stack resulting from laying up a plurality of cell units 10 in such a manner that in two adjacent cell units 10, the negative electrode 60 of one given cell unit 10 and the positive electrode 50 of another cell unit 10 face each other. One outermost layer of this stack constitutes the positive electrode 50 and the other outermost layer constitutes the negative electrode 60. In addition to the above stack, the stacked-type electrode body 20 may further have a single negative electrode, such that the single negative electrode is laid up on the positive electrode 50 of the outermost layer of the stack. This allows using the lithium in the positive electrode 50 of the outermost layer for charging and discharge, and allows increasing cell capacity.

A nonaqueous electrolyte solution same as or similar to those of known lithium ion secondary batteries can be used herein as the nonaqueous electrolyte solution. Typically, the nonaqueous electrolyte contains a nonaqueous solvent and a supporting salt (i.e. electrolyte salt). Various organic solvents such as carbonates, ethers, esters, nitriles, sulfones and lactones that are used in nonaqueous electrolyte solutions of known lithium ion secondary batteries can be used, without particular limitations, as the nonaqueous solvent. Carbonates are desired among the foregoing. Examples of carbonates include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyldifluoromethyl carbonate (F-DMC) and trifluorodimethyl carbonate (TFDMC). The nonaqueous solvent can be used singly or in combinations of two or more types, as appropriate. For instance, a lithium salt such as LiPF₆, LiBF₄ or LiClO₄ (desirably LiPF₆) can be suitably used as the supporting salt. The concentration of the supporting salt is desirably from 0.7 mol/L to 1.3 mol/L.

So long as the effect of the present disclosure is not significantly impaired thereby, the nonaqueous electrolyte solution may contain components other than the components described above, for instance, various additives such as a gas generating agent which may be biphenyl (BP), cyclohexylbenzene (CHB) or the like; as well as a thickener.

The lithium ion secondary battery 100 exhibits low initial resistance, and curtailed increases in resistance upon repeated charging and discharge. That is, the lithium ion secondary battery 100 exhibits superior resistance characteristics. Further, the lithium ion secondary battery 100 exhibits excellent impregnability of the nonaqueous electrolyte solution into the stacked-type electrode body 20 during production of the battery.

The lithium ion secondary battery 100 can be used in various applications. Suitable applications include drive power sources mounted in vehicles such asbattery electric vehicles (BEV), hybrid electric vehicles (HEV), and plug-in hybrid electric vehicles (PHEV). The lithium ion secondary battery 100 can also be used as storage batteries of small power storage devices, and the like. The lithium ion secondary battery 100 can be used in the form of a battery pack typically resulting from connection of a plurality of batteries in series and/or in parallel.

The present embodiment has been explained above on the basis of an example of a lithium ion secondary battery. However, the art disclosed herein pertains to a joining structure within the cell units 10, and accordingly it can be understood that the art disclosed herein can be applied also to nonaqueous electrolyte secondary batteries that utilize charge carriers other than lithium ions.

In the present embodiment, the first electrode having a larger area of a main surface of an active material layer is used as the negative electrode, and the second electrode is used as the positive electrode. In the art disclosed herein, however, the first electrode may be used as the positive electrode and the second electrode may be used as the negative electrode.

Examples relating to the present disclosure will be explained in detail hereafter, but the disclosure is not meant to be limited to the particulars described in such examples.

### Production of a Lithium Ion Secondary Battery for Evaluation

### Example 1

A positive electrode was prepared which had a positive electrode active material layer containing LiNi_{0.8}Co_{0.1}Mn_{0.1}O₂ on both faces of an aluminum foil having a thickness of 13 µm. The dimensions of a main surface of the positive electrode active material layer were 300 mm×100 mm, and the thickness of the positive electrode active material layer was 135 µm. Further, a negative electrode was prepared which had a negative electrode active material layer containing natural graphite on both faces of a copper foil having a thickness of 8 µm. The dimensions of the main surfaces of the negative electrode active material layer were 302 mm×102 mm, and the thickness of the negative electrode active material layer was 170 µm. A positive electrode active material layer non-formation section at which the aluminum foil was exposed was provided in the positive electrode, and a negative electrode active material layer non-formation section at which the copper foil was exposed was provided in the negative electrode.

Two single-layer polypropylene porous films were prepared as separators. The dimensions of main surfaces of the separators were 306 mm×104 mm, the thickness of the separators was 20 µm, and air permeability was 170 seconds/100 mL.

A rectangular through-hole was formed by punching at the position illustrated in FIG. 2 and FIG. 3 of the positive electrode active material layer non-formation section (i.e. in the exposed aluminum foil), namely, at a position adjacent to a positive electrode active material layer, in the central portion in the width direction. The positive electrode was sandwiched between the two separators, and the two separators were welded to each other by ultrasonic welding, at the positions illustrated in FIG. 3, i.e. at two sites including the through-hole of the positive electrode active material layer non-formation section, and a portion outward of the end of the positive electrode opposing the positive electrode active material layer non-formation section.

A hot melt adhesive "Hi-Bon ZH234-1" (by Hitachi Kasei Corporation) was applied onto a region, of the main surface of the negative electrode active material layer of the negative electrode, that was not to face the positive electrode active material layer. The adhesive was applied at 6 sites, in the form of φ0.5 mm microdots. The application positions were the four corners of the region not facing the positive electrode active material layer, and the central portions on the two long sides of that region.

The separators that sandwiched the positive electrode, and the negative electrode, were superimposed and were pressed at 90°C at a pressure of 0.5 MPa for 1 minute, to perform bonding by the hot-melt adhesive, and produce a cell unit. There were produced 90 of these cell units, which were then stacked on each other to yield a stacked-type electrode body.

A nonaqueous electrolyte solution was then prepared by dissolving LiPF₆ as a supporting salt, to a concentration of 1.1 mol/L, in a mixed solvent containing ethylene carbonate (EC), ethyl methyl carbonate (EMC) and dimethyl carbonate (DMC) at a volume ratio of 3:4:3.

Tab leads were attached to the stacked-type electrode body by ultrasonic joining, and the resultant was accommodated in an aluminum laminate case. The above nonaqueous electrolyte solution was poured into the laminate case, and the resultant was then vacuum-sealed. After being allowed to stand for 24 hours, a pressure of 2 MPa was applied to the resultant, and constant-current charging (pre-charging) was performed up to 2.75 V, at a current value of 0.2 C. Part of the laminate case was cut under vacuum, and the case was degassed and then re-sealed.

A pressure of 1 MPa was applied to this, and constant-current charging was performed up to 4.25 V, at a current value of 0.3 C. Then, constant-voltage charging was carried out at a voltage of 4.25 V with a cut-off current value set to 1.5 A, to produce a lithium ion secondary battery for evaluation having a SOC of 100%.

### Reference Example 1

The same positive electrode and negative electrode as in Example 1 were prepared. Also the same two separators as in Example 1 (i.e. a single-layer polypropylene porous film ; main surface dimensions: 306 mm×104 mm, thickness 20 µm, air permeability 170 seconds /100 mL) were prepared.

The positive electrode was sandwiched between the two separators. A cell unit was then produced by superimposing the separators, which had sandwiched the positive electrode, and the negative electrode. There were produced 90 of these cell units, which were then stacked to yield a stacked-type electrode body. A lithium ion secondary battery for evaluation was produced in the same way as in Example 1, using this stacked-type electrode body.

### Comparative Example 1

The same positive electrode and negative electrode as in Example 1 were prepared. Further, two polypropylene porous films having, on both faces thereof, adhesive layers that contained alumina and polyvinylidene fluoride were prepared as separators. The dimensions of the main surface of the separators were 306 mm×104 mm, the thickness of the separators was 20 µm (adhesive layer 2 µm+ base material 16 µm+ adhesive layer 2 µm), and air permeability was 170 seconds /100 mL.

The positive electrode was sandwiched between the two separators. The separators that had sandwiched the positive electrode, and the negative electrode, were superimposed and were pressed at 90°C under a pressure of 0.5 MPa for 1 minute, to perform bonding of the two separators and the positive electrode, and bonding of one separator and the negative electrode, and produce thus a cell unit. There were produced 90 of these cell units, which were then stacked to yield a stacked-type electrode body. A lithium ion secondary battery for evaluation was produced in the same way as in Example 1, using this stacked-type electrode body.

### Comparative Example 2

The same positive electrode and negative electrode as in Example 1 were prepared. Further, two polypropylene porous films having, on one face thereof, an adhesive layer that contained alumina and polyvinylidene fluoride were prepared as separators. The dimensions of a main surface of the separators were 306 mm×104 mm, the thickness of the separators was 20 µm (base material 18 µm+ adhesive layer 2 µm), and air permeability was 170 seconds/100 mL.

The positive electrode was sandwiched between the two separators so that the adhesive layer of each separator faced the positive electrode. The separators that had sandwiched the positive electrode, and the negative electrode, were superimposed and were pressed at 90°C under a pressure of 0.5 MPa for 1 minute, to perform bonding of the two separators and the positive electrode, and produce thus a cell unit. There were produced 90 of these cell units, which were then stacked to yield a stacked-type electrode body. A lithium ion secondary battery for evaluation was produced in the same way as in Example 1, using this stacked-type electrode body.

### Evaluation of Initial Resistance Characteristic

Pressure of 1 MPa was applied on each lithium ion secondary battery for evaluation, in a temperature environment at 25°C, and the battery was adjusted to a SOC of 50%. Thereafter, the battery was discharged at constant current for 10 seconds, at a current value of 2 C. The amount of change of voltage at this time was determined, and an initial resistance value was calculated from the amount of change of voltage and the current value. The results are given in Table 1.

### Evaluation of Resistance Characteristic after Charging / Discharge Cycling

Pressure of 1 MPa was applied on each lithium ion secondary battery for evaluation, in a temperature environment at 25°C. The battery was charged at constant current of 1 C from 2.5 V up to 4.25 V, and was then discharged at constant current of 1 C from 4.25 V to 2.5 V; this charging/discharge cycle was repeated over 100 cycles. A relaxation time between charging/discharge cycles was set to 10 minutes. Thereafter, the resistance value was calculated in the same manner as the initial resistance. The results are given in Table 1.

### [Table 1]

**Table 1**

| | Joining form | Initial resistance (mΩ) | Resistance after 100 cycles (mΩ) |
|---|---|---|---|
| | Separator - positive electrode | | |
| Reference example 1 | No bonding | 0.88 | 0.93 |
| Comparative example 1 | Surface bonding | 0.97 | 1.26 |
| Comparative example 2 | Surface bonding | 0.94 | 1.03 |
| Example 1 | Welding between separators at through-hole | 0.88 | 0.93 |

A comparison between Reference example 1, Comparative example 1 and Comparative example 2 reveals that the resistance characteristic worsens on account of bonding between the separators and the electrodes. In particular, a comparison between Comparative example 1 and Comparative example 2 indicates that resistance characteristic deteriorates when the area where the adhesive is used is large.

However, Example 1 in which the positive electrode active material layer non-formation section was provided with a missing portion and the two separators were welded at the missing portion, without being bonded to the positive electrode active material layer, exhibited a resistance characteristic similar to that of Reference example 1. It is, therefore, considered that in Example 1, a lithium ion secondary battery is obtained in which initial resistance is small and in which increases in resistance upon repeated charging and discharge are suppressed, despite the fact that the positive electrode and separators are fixed by welding.

From all the above, it follows that the nonaqueous electrolyte secondary battery disclosed herein exhibits small initial resistance and curtailed increases in resistance upon repeated charging and discharge.

Concrete examples of the present disclosure have been explained in detail above, but the examples are merely illustrative in nature, and are not meant to limit the scope of the claims in any way. The invention is as set out in the appended claims.

## Claims

1. A nonaqueous electrolyte secondary battery (100) comprising:
a stacked-type electrode body (20) which includes a cell unit (10) in which a first electrode (60), a first separator (71), a second electrode (50) and a second separator (72) are laid up in this order, and
a nonaqueous electrolyte solution, wherein
the first electrode (60) has a first collector (62), and a first active material layer (64) provided on both faces of the first collector (62);
the second electrode (50) has a second collector (52), and a second active material layer (54) provided on both faces of the second collector (52);
the area of a main surface of the first separator (71) and the area of a main surface of the second separator (72) are larger than the area of a main surface of the first active material layer (64) of the first electrode (60) and the area of a main surface of the second active material layer (54) of the second electrode (50);
a second active material layer non-formation section (52a) at which the second active material layer (54) is not formed and the second collector (52) is exposed, is provided in the second electrode (50);
the second active material layer non-formation section (52a) has a missing portion (53) in which the second collector (52) is removed, from one main surface up to an opposing main surface;
the first separator (71) and the second separator (72) are not bonded to the second active material layer (54) of the second electrode (50);
the first separator (71) and the second separator (72) are welded at the missing portion (53) of the second active material layer non-formation section (52a);
the first active material layer (64) and the second active material layer (54) oppose each other;
the area of the main surface of the first active material layer (64) of the first electrode (60) is larger than the area of the main surface of the second active material layer (54) of the second electrode (50);
an opposing region (64a) that opposes the second active material layer (54) is formed in a central portion of the first active material layer (64);
a non-opposing region (64b) that does not oppose the second active material layer (54) is formed in an outer peripheral edge portion of the first active material layer (64);
the first separator (71) and the first electrode (60) are bonded by a first adhesive (80); and
the first adhesive (80) that bonds the first electrode (60) and the first separator (71) is not disposed in the opposing region (64a) of the first active material layer (64), and is disposed outside the opposing region (64a).

2. The nonaqueous electrolyte secondary battery (100) according to claim 1, wherein the missing portion (53) is a through-hole.

3. The nonaqueous electrolyte secondary battery (100) according to claim 1 or 2, wherein the first electrode (60) is a negative electrode and the second electrode (50) is a positive electrode.

4. The nonaqueous electrolyte secondary battery (100) according to any one of claims 1 to 3, wherein the thickness of the first adhesive (80) is smaller than the thickness of the second electrode (50).

5. The nonaqueous electrolyte secondary battery (100) according to any one of claims 1 to 4, wherein
the stacked-type electrode body (20) has
a stack in which a plurality of the cell units (10) is laid up, such that outermost layers of the stack are respectively a positive electrode and a negative electrode,
and a single negative electrode, and
the single negative electrode is laid on the positive electrode of the outermost layer of the stack.

## Patentansprüche

1. Sekundärbatterie (100) mit nichtwässrigem Elektrolyten, aufweisend:
einen Elektrodenkörper (20) vom gestapelten Typ, der eine Zelleinheit (10) umfasst, in der eine erste Elektrode (60), ein erster Separator (71), eine zweite Elektrode (50) und ein zweiter Separator (72) in dieser Reihenfolge angeordnet sind, und
eine nichtwässrige Elektrolytlösung, wobei
die erste Elektrode (60) einen ersten Kollektor (62) und eine erste Aktivmaterialschicht (64), die auf beiden Seiten des ersten Kollektors (62) bereitgestellt ist, aufweist;
die zweite Elektrode (50) einen zweiten Kollektor (52) und eine zweite Aktivmaterialschicht (54), die auf beiden Seiten des zweiten Kollektors (52) bereitgestellt ist, aufweist;
der Bereich einer Hauptfläche des ersten Separators (71) und der Bereich einer Hauptfläche des zweiten Separators (72) größer sind als der Bereich einer Hauptfläche der ersten Aktivmaterialschicht (64) der ersten Elektrode (60) und der Bereich einer Hauptfläche der zweiten Aktivmaterialschicht (54) der zweiten Elektrode (50);
in der zweiten Elektrode (50) ein zweiter Aktivmaterialschicht-Nicht-Ausbildungsabschnitt (52a) bereitgestellt ist, an dem die zweite Aktivmaterialschicht (54) nicht ausgebildet ist und der zweite Kollektor (52) freiliegt;
der zweite Aktivmaterialschicht-Nicht-Ausbildungsabschnitt (52a) einen Fehl-Abschnitt (53) aufweist, in dem der zweite Kollektor (52) von einer Hauptfläche bis zu einer gegenüberliegenden Hauptfläche entfernt ist;
der erste Separator (71) und der zweite Separator (72) mit der zweiten Aktivmaterialschicht (54) der zweiten Elektrode (50) nicht verbunden sind;
der erste Separator (71) und der zweite Separator (72) an dem Fehl-Abschnitt (53) des zweiten Aktivmaterialschicht-Nicht-Ausbildungsabschnitts (52a) verschweißt sind;
die erste Aktivmaterialschicht (64) und die zweite Aktivmaterialschicht (54) einander gegenüberliegen;
der Bereich der Hauptfläche der ersten Aktivmaterialschicht (64) der ersten Elektrode (60) größer ist als der Bereich der Hauptfläche der zweiten Aktivmaterialschicht (54) der zweiten Elektrode (50);
in einem zentralen Abschnitt der ersten Aktivmaterialschicht (64) ein der zweiten Aktivmaterialschicht (54) gegenüberliegender Bereich (64a) ausgebildet ist;
in einem Außenumfangsrandabschnitt der ersten Aktivmaterialschicht (64) ein der zweiten Aktivmaterialschicht (54) nicht gegenüberliegender Bereich (64b) ausgebildet ist;
der erste Separator (71) und die erste Elektrode (60) durch einen ersten Klebstoff (80) verbunden sind; und
der erste Klebstoff (80), welcher die erste Elektrode (60) und den ersten Separator (71) verbindet, nicht in dem gegenüberliegenden Bereich (64a) der ersten Aktivmaterialschicht (64) angeordnet ist, und außerhalb des gegenüberliegenden Bereichs (64a) angeordnet ist.

2. Sekundärbatterie (100) mit nichtwässrigem Elektrolyten nach Anspruch 1, wobei der Fehl-Abschnitt (53) ein Durchgangsloch ist.

3. Sekundärbatterie (100) mit nichtwässrigem Elektrolyten nach Anspruch 1 oder 2, wobei die erste Elektrode (60) eine Negativelektrode und die zweite Elektrode (50) eine Positivelektrode ist.

4. Sekundärbatterie (100) mit nichtwässrigem Elektrolyten nach einem der Ansprüche 1 bis 3, wobei die Dicke des ersten Klebstoffs (80) geringer ist als die Dicke der zweiten Elektrode (50).

5. Sekundärbatterie (100) mit nichtwässrigem Elektrolyten nach einem der Ansprüche 1 bis 4, wobei
der Elektrodenkörper (20) vom gestapelten Typ aufweist
einen Stapel, in dem eine Mehrzahl der Zelleinheiten (10) so angeordnet ist, dass äußerste Schichten des Stapels entsprechend einer Positivelektrode und einer Negativelektrode entsprechen,
und eine einzelne Negativelektrode, und
die einzelne Negativelektrode auf der Positivelektrode der äußersten Schicht des Stapels angeordnet ist.

## Revendications

1. Une batterie secondaire à électrolyte non aqueux (100) comprenant :
un corps d'électrode de type empilé (20) qui comprend une unité de cellule (10) dans laquelle une première électrode (60), un premier séparateur (71), une deuxième électrode (50) et un deuxième séparateur (72) sont disposés dans cet ordre, et
une solution d'électrolyte non aqueux, dans laquelle
la première électrode (60) comporte un premier collecteur (62) et une première couche de matière active (64) disposée sur les deux faces du premier collecteur (62) ;
la deuxième électrode (50) comporte un deuxième collecteur (52) et une deuxième couche de matière active (54) disposée sur les deux faces du deuxième collecteur (52) ;
la surface principale du premier séparateur (71) et la surface principale du deuxième séparateur (72) sont plus grandes que la surface principale de la première couche de matière active (64) de la première électrode (60) et que la surface principale de la deuxième couche de matière active (54) de la deuxième électrode (50) ;
une section (52a) de non-formation de la deuxième couche de matière active, dans laquelle la deuxième couche de matière active (54) n'est pas formée et où le deuxième collecteur (52) est exposé, est prévue dans la deuxième électrode (50) ;
la section sans formation de la deuxième couche de matériau actif (52a) comporte une partie manquante (53) dans laquelle le deuxième collecteur (52) est retiré, depuis une surface principale jusqu'à une surface principale opposée ;
le premier séparateur (71) et le deuxième séparateur (72) ne sont pas liés à la deuxième couche de matériau actif (54) de la deuxième électrode (50) ;
le premier séparateur (71) et le deuxième séparateur (72) sont soudés au niveau de la partie manquante (53) de la section (52a) de la deuxième couche de matériau actif où celle-ci n'est pas formée ;
la première couche de matériau actif (64) et la deuxième couche de matériau actif (54) se font face ;
la surface de la face principale de la première couche de matière active (64) de la première électrode (60) est supérieure à la surface de la face principale de la deuxième couche de matière active (54) de la deuxième électrode (50) ;
une région opposée (64a) qui fait face à la deuxième couche de matière active (54) est formée dans une partie centrale de la première couche de matière active (64) ;
une région non opposée (64b), qui ne fait pas face à la deuxième couche de matériau actif (54), est formée dans une partie de bord périphérique externe de la première couche de matériau actif (64) ;
le premier séparateur (71) et la première électrode (60) sont liés par un premier adhésif (80) ; et
le premier adhésif (80) qui lie la première électrode (60) et le premier séparateur (71) n'est pas disposé dans la région de contact (64a) de la première couche de matériau actif (64), et est disposé à l'extérieur de la région de contact (64a).

2. La batterie secondaire à électrolyte non aqueux (100) selon la revendication 1, dans laquelle la partie manquante (53) est un trou traversant.

3. La batterie secondaire à électrolyte non aqueux (100) selon la revendication 1 ou 2, dans laquelle la première électrode (60) est une électrode négative et la deuxième électrode (50) est une électrode positive.

4. La batterie secondaire à électrolyte non aqueux (100) selon l'une quelconque des revendications 1 à 3, dans laquelle l'épaisseur du premier adhésif (80) est inférieur à l'épaisseur de la deuxième électrode (50).

5. La batterie secondaire à électrolyte non aqueux (100) selon l'une quelconque des revendications 1 à 4, dans laquelle
le corps d'électrode de type empilé (20) comporte
un empilement dans lequel une pluralité d'unités de cellule (10) est disposée, de telle sorte que les couches les plus externes de l'empilement soient respectivement une électrode positive et une électrode négative,
et une seule électrode négative, et
ladite seule électrode négative est disposée sur l'électrode positive de la couche la plus externe de l'empilement.
